# EUROPÄISCHE PATENTSCHRIFT

(11) **EP 1 941 091 B1**
(45) Veröffentlichungstag und Bekanntmachung des Hinweises auf die Patenterteilung: **28.01.2009**
(21) Anmeldenummer: 06775884.7
(22) Anmeldetag: 19.08.2006
(51) Int. Cl.: D06B 23/26, G01N 21/89

(54) **VORRICHTUNG ZUR RELATIVEN FARBMESSUNG AN EINER MATERIALBAHN**
COLORIMETRIC DEVICE FOR RELATIVE COLOUR MEASUREMENT OF A MATERIAL WEB
DISPOSITIF DE MESURE DE COULEUR RELATIVE SUR UNE BANDE DE MATIERE

(30) Priorität: 20.09.2005 DE 102005044919
(43) Veröffentlichungstag der Anmeldung: 09.07.2008
(73) Patentinhaber: A. Monforts Textilmaschinen GmbH & Co. KG., 41238 Mönchengladbach (DE)
(72) Erfinder: DOGAN, Ünal, 54612 Nimshuscheid (DE); KUHL, Matthias, 54570 Kalenborn-Scheuern (DE)
(74) Vertreter: von Creytz, Dietrich
(86) Internationale Anmeldenummer: PCT/DE2006/001460
(87) Internationale Veröffentlichungsnummer: WO 2007/033636

(56) Entgegenhaltungen:
- EP-A2- 0 675 466
- WO-A-96/09533
- WO-A-97/17604
- DE-A1- 4 131 835
- DE-A1- 4 238 234
- DE-A1- 4 308 501

## Beschreibung

Die Erfindung betrifft eine Vorrichtung zur relativen Farbmessung an einer bewegten Materialbahn mit Hilfe eines Mehrbereichs-Farbsensors, insbesondere Dreibereichs-Farbsensor, zum Ermitteln und Vergleichen des Farbausfalls in sich parallel zur Materialbahnlänge erstreckenden Bereichen.

Sogenannte Farbsensoren werden beschrieben in WO97/17604A und WO96/09533A. Es handelt sich aber nicht um Sensoren zum Ermitteln der Farbe selbst sondern zum Erfassen der Farbintensität. Die bekannten Sensoren können beispielsweise rot und blau - bei gleicher Intensität - nicht unterscheiden. In EP0675466A2 wird eine Farbzeilenkamera zum Ermitteln der Oberflächenbeschaffenheit von Gegenständen beschrieben. Eine Farbzeilenkamera ist kein gattungsgemäßer Mehrbereichs-Farbsensor. DE4238234A1 betrifft ein Verfahren zur Farbflottenverteilung auf einer Textilbahn, bei der als Kenngröße für die Farbverteilung allein die Helligkeit der in die Farbe getauchten noch nassen Warenbahn dient.

In Anlagen, in denen breite Materialbahnen bezüglich ihrer farblichen Eigenschaften, textile Stoffbahnen speziell bei Uni-Färbungen, überwacht werden sollen, kommt es darauf an, daß die aktuelle Farbe über die gesamte Bahnbreite und Länge gleich ausfällt. Solche Anlagen finden sich zum Beispiel in der Textilindustrie aber auch bei der Papierherstellung und -Veredelung, bei der Herstellung von Kunststoff-Bodenbelägen, Furnieren usw. Hierbei können Materialbahnbreiten von mehreren Metern vorkommen. Die Materialbahnen werden im Produktionsprozeß häufig mit hohen Geschwindigkeiten (in Bahnlängsrichtung) bewegt, oft werden mehrere Meter Ware pro Sekunde gefördert.

Farbfehler werden häufig in CIELab-System als Farbfehler dE-Wert angegeben. Hierzu sei Folgendes vorausgeschickt: Die in der CIE 1931 CMF definierten Filterfunktionen bilden die Basis für sehr viele heute gebräuchliche Farbmodelle. Es gibt deshalb so viele Farbmodelle, weil unterschiedliche Anforderungen nicht mit dem gleichen Modell erfüllt werden können. Eine solche Anforderung besteht häufig darin, Farbfehler zu beschreiben. Hierzu wurde, dem menschlichen Sehempfinden angepasst, das sogenannte CIELabModell entwickelt. Die zugehörigen, im Verhältnis zu einer Referenz gebildeten Lab-Werte ergeben sich direkt aus der CIE 1931 CMF. Aus diesen Lab-Werten kann wiederum der vorgenannte Farbfehler dE berechnet werden.

Allgemeingültig ist, dass ein dE von "1" von den meisten Menschen nicht mehr wahrgenommen wird. Die Praxis zeigt aber, dass auch dieses Farbmodell bzw. die "dE = 1 Regel" das menschliche Farbempfinden bzgl. Farbunterschieden nicht in allen Farbbereichen ausreichend gut repräsentiert. Man kann davon ausgehen, dass geschulte Augen (z.B. ein Färbemeister in der Textilveredelung) auch Farbfehler von dE = 0,3 erkennen. Daraus ergibt sich für oben beschriebene Anlagen die Forderung nach einem Farbmeßsystem, mit dem Fehler von dE<= 0,1 noch zuverlässig aufzulösen sind. Bei dieser Größenordnung der Meßgenauigkeit können parasitäre Effekte durch Temperatur, mechanische Meßfehler ( z. B. ungleiche Abstände an den Meßstellen), Umgebungslicht und vor allem durch Alterung der für die Farbmessung zwingend notwendigen Leuchten nicht mehr ignoriert werden.

Zum Ausführen der vorgenannten Farbmessungen gibt es beispielsweise sogenannte Drei-Bereichs-Farbsensorelemente. Ein Drei-Bereichs-Farbsensor ist ein einzelnes Sensorelement, das eintreffendes Licht gleich welcher Wellenlänge in drei Wellenlängenbereiche aufteilt und für jeden Bereich getrennte Informationen hierzu liefert. Wenn dieser Sensor im sichtbaren Bereich des Lichtes arbeitet und zusätzlich die drei Wellenlängenbereiche Empfindlichkeitsverläufe aufweisen, die zumindest auf die CIE 1931 CMF rückführbar sind, spricht man von einem True-Color-Sensor.

Drei-Bereichs-Farbsensoren arbeiten in der Regel als Stand-Alone-Geräte, die sich unter anderem dadurch auszeichnen, daß die Lichtquelle in die Geräte integriert ist oder von diesen individuell gesteuert wird. Da ein solches Gerät eine in sich geschlossene Einheit darstellt, wirken sich Alterungseffekte der Lichtquelle auf jedes Gerät und damit jede Meßstelle individuell aus. Selbst' wenn während der Inbetriebnahme einer Anlage die einzelnen Meßstellen über eine geeignete Justierung relativ gut ausgeglichen wurden, laufen die Meßergebnisse wegen der unterschiedlichen Alterungseffekte der einzelnen Beleuchtungen bzw. Lichtquellen schon nach kurzer Zeit wieder auseinander, so daß eine erneute Justierung nötig wird. Spätestens, wenn nach einer längeren Betriebsdauer eines der Geräte, z. B. wegen eines Defektes, ausgetauscht werden muß, wird eine Nachjustierung zwingend erforderlich.

Es können sich aber auch Probleme aus dem Drei-Bereichs-Farbsensorgerät selbst ergeben, beispielsweise wenn sich die Geräte durch die dem jeweiligen Bereich entsprechend implementierten Filterkennlinien ergeben. Haben diese Filterkennlinien steile Flanken im Übergang zum Sperrbereich und/oder flache "Dächer" im Durchlaßbereich, dann gibt es Zonen an den Flanken im sichtbaren Spektrum des Lichts, in denen kleinste Änderungen der Farbe zu extremen Änderungen im Meßergebnis führen, während gleichzeitig bei anderen Farben selbst größere Farbfehler im Meßergebnis kaum deutlich werden. Da Filterfunktionen nicht mit beliebiger Genauigkeit reproduziert werden können, ergibt sich speziell bei Filtern mit steilen Flanken noch das zusätzliche Problem, daß unterschiedliche Sensorelemente des gleichen Typs auf Grund von Produktionstoleranzen bei den Filtern mit hoher Wahrscheinlichkeit bei gleichen Meßbedingungen unterschiedliche Meßergebnissen liefern. Das gilt speziell dann, wenn die zu messende Farbe nennenswerte Spektralanteile im Bereich der Filterflanken aufweist. Solche Dreibereichs-Farbsensorgeräte sind für die genannte Meßaufgabe also eher ungeeignet.

Daher gibt es die vorgenannten Drei-Bereichs-Farbsensorgeräte mit "True-Color" Eigenschaften. Hierbei werden die Filterfunktionen der sogenannten Color-Matching-Function CIE 1931-2° der Standard-Observer nachempfunden. Einfach lässt sich hierzu sagen: Wenn ein Sensor die in dieser Norm beschriebenen Filterfunktionen realisiert, so lassen sich daraus direkt Messwerte ableiten, die das menschliche Farbempfinden "am besten" beschreiben, da auch das menschliche Auge prinzipiell in einem Drei-Bereichs-Verfahren arbeitet. Die in der Norm erläuterten Filterfunktionen werden zwar häufig fälschlicherweise als Augenempfindlichkeitskurven bezeichnet, dennoch ergeben sie sich direkt aus empirischen Versuchen bezüglich des menschlichen Sehempfindens.

Die beschriebene Filterfunktion bietet nicht nur den Vorteil "weicher' Filterverläufe, die daher auch toleranter auf Produktionsunterschiede reagieren, sondern in diesem speziellen Fall auch die Möglichkeit, die Meßwerte mit einer viel höheren Genauigkeit für eine Bewertung im CIELab-System verwenden zu können. Das Auflösungsvermögen bzw. die Farbunterschiede ergeben sich dabei prinzipiell nur aus der Genauigkeit des Folgesystems, das die analogen Signale des Sensorgeräts weiter aufbereitet.

Wegen der vorgenannten Probleme, die entstehen, wenn einzelne handelsübliche Farbsensoren an mehreren Meßstellen eingesetzt werden, wird die eingangs genannte Meßaufgabe bisher auf herkömmliche Weise gelöst. Hierbei kommt nach DE 43 08 501 A1, EP 0411 414 B1 und EP 1276 926 B1 ein einzelnes Farbmeßgerät zum Einsatz, das - montiert auf einer traversierenden Welle - kontinuierlich in Richtung der Stoffbahnbreite hin und her bewegt wird und dabei an diversen Meßstellen einzelne Messungen vornimmt. Diese Ergebnisse können dann miteinander verglichen werden. Aufgrund des geforderten Auflösungsvermögen kommt dabei als Farbmeßgerät ein Spektrometer-System zum Einsatz. Der Vorteil dieser Anordnung besteht darin, daß viele der genannten parasitären Effekte und damit auch speziell die Alterung der auch hier benötigten Lichtquelle sich nur auf ein einzelnes Gerät und damit auf alle Meßstellen gleich auswirken. Solche Effekte beeinflussen also die relative Genauigkeit nicht. Daneben ermöglicht die Verwendung eines Spektrometers prinzipiell ein hohes Auflösungsvermögen bei der Farbmessung.

Das zuletzt genannte herkömmliche Verfahren hat aber auch schwerwiegende Nachteile. Das Spektrometer-System selbst, aber auch das benötigte Achssystem zum Traversieren des Meßgeräts, sind aufwendig. Da sich das Achssystem und das Meßsystem ständig bewegen, unterliegt das Gerät einem hohen mechanischen Verschleiß. Ferner hängen die Meßzeiten, bei dem Spektrometer stark von der Intensität des einfallenden Lichtes ab. Um die Meßzeit kurz zu halten, werden sehr helle Lichtquellen eingesetzt, die ebenfalls teuer sind und eine begrenzte Lebensdauer besitzen. Da diese Geräte im allgemeinen nicht mit höheren Frequenzen zu modulieren sind, scheiden Differenzmeßverfahren aus, so daß eine erhebliche Empfindlichkeit gegenüber dem Umgebungslicht in Kauf zu nehmen ist. Schließlich ergibt sich aus der Zeit für die Verfahrbewegung (des einzelnen Meßgeräts) quer zur Stoffbahnlängsrichtung und aus den relativ langen Einzel-Meßzeiten, daß - speziell bei höheren Bahntransportgeschwindigkeiten - mehrere Meter Ware durchgelaufen sind, bevor genügend Meßwerte für ein Farbprofil in Querrichtung vorliegen.

Der Erfindung liegt die Aufgabe zur Grunde, eine Vorrichtung zu schaffen, mit deren Hilfe es gelingt, die Gesamtkosten des Farbmeßsystems bei vergrößerter Meßgeschwindigkeit merklich zu reduzieren, ohne dabei auf eine relativ hohe Genauigkeit und Empfindlichkeit sowie eine akzeptable Lebensdauer verzichten zu müssen. Alterungseffekte sollen nicht zu unterschiedlichen Meßergebnissen an den einzelnen Meßpunkten führen. Umgebungslichtfehler sollen kompensierbar sein.

Für die eingangs genannte Vorrichtung zur relativen Farbmessung an einer vorbeilaufenden Materialbahn mit Hilfe eines Mehrbereichs-Farbsensors besteht die erfindungsgemäße Lösung im Anspruch 1 angegeben. Einige Verbesserungen und weitere Ausgestaltungen der Erfindung werden in den Unteransprüchen beschrieben.

Erfindungsgemäß besitzt der Farbsensor mehrere quer zur Materialbahnlänge gleichlaufende Messpunkte mit einer, vorzugsweise einzigen, gemeinsamen Lichtquelle. "Gleichlaufend" heißt, dass die Bahn zugleich an zwei oder mehr Messpunkten abgetastet wird. Vor allem durch den Gleichlauf der Messpunkte werden Mängel des herkömmlichen CIELab-systems überwunden. Daher werden im Rahmen der Erfindung hohe Anforderungen gerade in Bezug auf den Gleichlauf der Messpunkte gestellt. Die zu prüfende Materialbahn kann bevorzugt eine textile Stoffbahn einerseits oder eine Papier- bzw. Kunststoffbahn, ein Furnierband oder dergleichen langgestrecktes nicht textiles Flächengebilde andererseits sein.

Die erfindungsgemäße Farbmeßvorrichtung wird mit einem Mehrbereichs-Farbsensorgerät bzw. -element mit Gleichlauf der Meßpunkte des Sensors ausgestattet. Wegen der oben angegebenen Probleme mit einfachen Drei- oder Mehrbereichs-Farbsensorgeräten werden im Rahmen der Erfindung bevorzugt True-Color-Drei- oder Mehrbereichsfarbsensoren eingesetzt. Den Meßpunkten wird eine gemeinsame Lichtquelle zugeordnet. Bei Bedarf kann eine Temperaturkompensation der Farbsensorgeräte vorgesehen werden. Auf diese Weise wird durch die Erfindung die Möglichkeit geschaffen, Meßwerte von unterschiedlichen Meßstellen zeitgleich aufzunehmen, ohne daß Alterungserscheinungen der Lichtquelle Fehler hervorrufen können, weil sich Alterungsprozesse der Lichtquelle auf alle - erfindungsgemäß gleichlaufenden - Messpunkte bzw. Abfragestellen gleichmäßig auswirken.

Erfindungsgemäß wird eine Temperaturkompensation des Geräts vorgesehen, um entsprechende Drifterscheinungen auszugleichen. Wenn also die Gefahr besteht, daß die Temperatur an den Positionen der einzelnen Meßgeräte bzw. Meßpunkte unterschiedlich ist, kann eine solche Temperaturkompensation vorteilhaft sein. Verfälschungen der Meßergebnisse durch Temperaturgänge können in auf dem technischen Sachgebiet üblicher Weise vorgenommen werden.

Nach einem weiteren Aspekt der Erfindung wird es möglich, durch Fremdlicht bzw. Umgebungslicht verursachte Fehler zu kompensieren. Hierzu sind eine Differenzmessung, einmal bei eingeschalteter Beleuchtung und einmal bei abgeschalteter Beleuchtung, vorgenommen.

Schließlich bezieht sich die Erfindung allgemein auf eine Vorrichtung zur relativen Farbmessung mit Hilfe eines True-Color-Mehrbereichs-Farbsensors. Im allgemeinen genügt allerdings ein Dreibereichs-Farbsensor. Vorzugsweise wird die erfindungsgemäße Vorrichtung mit True-Color-Dreibereichs-Farbsensorgeräten ausgestattet. Gegebenenfalls erhält man eine synchrone Farbmessung mit hoher relativer Genauigkeit bei mehreren Drei-Bereichs-Farbsensorelementen des True-Color-Typs an mehreren gleichlaufenden Messpunkten. Die oben angegebenen Probleme mit den Filterkennlinien lassen sich erfindungsgemäß durch eine targetbezogene lineare und/oder nicht-lineare Korrekturmatrix zur Angleichung der Filterfunktion jedes der einzelnen Messpunkte befriedigend bewältigen.

Anhand der schematischen Darstellung eines - beispielsweise eine textile Stoffbahn betreffenden - Ausführungsbeispiels werden Einzelheiten der Erfindung erläutert. Es zeigen
- Fig. 1: einen Foulard mit anschließender Quetsche; und
- Fig. 2: das Schema einer erfindungsgemäßen Vorrichtung zur Farbmessung an der nach Fig. 1 behandelten Warenbahn.

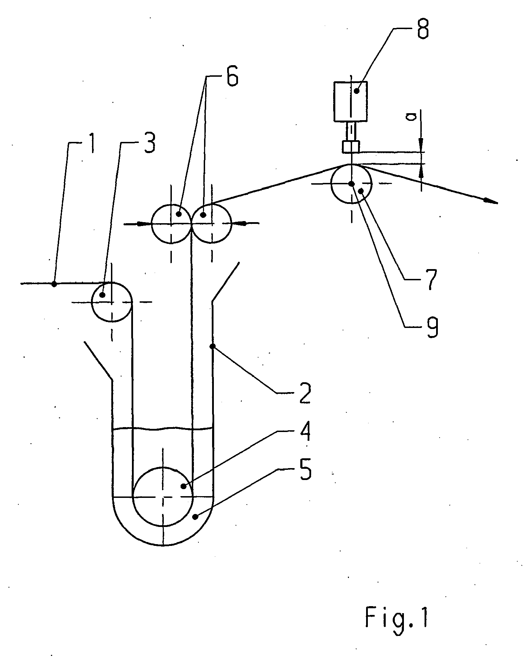

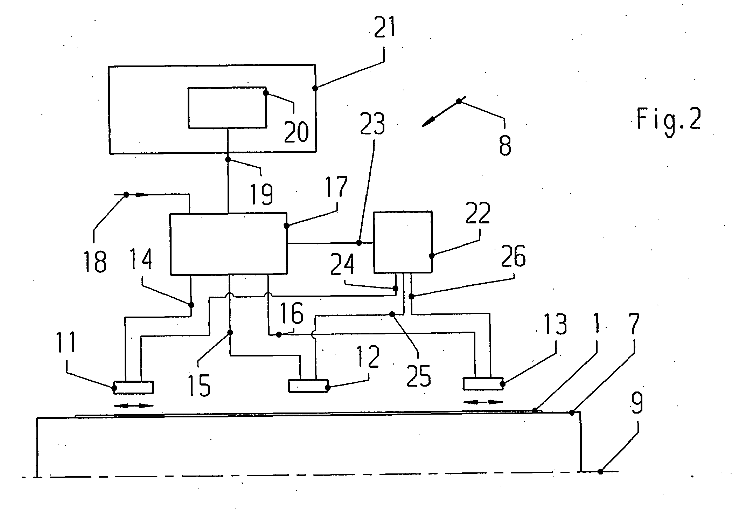

Im Ausführungsbeispiel nach Fig. 1 wird eine textile Warenbahn 1 im ausgebreiteten Zustand durch ein insgesamt mit 2 bezeichneten Foulard, z. B. über Walzen 3 und 4, in einer Behandlungsflüssigkeit 5, z. B. Farbe, getaucht und anschließend in einer aus zwei (in Pfeilrichtung) gegeneinander zu pressenden Walzen bestehenden Quetsche 6 auf eine vorgegebene Restfeuchte gebracht. In der Quetsche 6 soll eine überall auf Breite und Länge der Warenbahn 1 gleiche Restfeuchte eingestellt werden. Um zu überprüfen, ob das Ziel einer Gleichverteilung der Behandlungsflüssigkeit in der Warenbahn 1 erreicht ist, wird die Bahn über eine Walze 7, welcher eine erfindungsgemäße Sensorvorrichtung 8 zugeordnet ist, in Pfeilrichtung geleitet. Die Sensorvorrichtung 8 mit Walze 7 und Warenbahn 1 wird in Fig. 2 mit einigen wesentlichen Einzelheiten (in einer Ebene mit der Achse 9 der Walze 7) dargestellt.

Im Ausführungsbeispiel nach Fig. 2 werden der über die Walze 7 laufenden Warenbahn 1 drei Detektoren 11, 12 und 13 zugeordnet. (11 = Detektor links, 12 = Detektor Mitte, 13 = Detektor rechts). Die Detektoren 11 bis 13 werden in einem vorgegebenen Abstand a von der Fläche der Warenbahn 1 bzw. der Oberfläche der Walze 7 fixiert oder unter Einhaltung des Abstands a quer zur Warenbahn-Transportrichtung hin- und herbewegt. Die Detektoren 11 bis 13 werden über Lichtleiter 14 bis 16 mit den Kanälen A bis C eines Farb-Sensors 17 verbunden. Der Farb-Sensor 17 besitzt eine Stromversorgung 18 und einen Anschluss 19 zu einem PC 20 (Controller bzw. Host). Der PC 20 wird auf eine Liniensteuerung 21 geschaltet, die die Quetschkraftverteilung in der Quetsche 6 nach Fig. 1 so regelt, dass die gewünschte Gleichverteilung der Restfeuchte in der Warenbahn 1 ständig aufrecht zu erhalten bzw. einzustellen ist.

Ein im Rahmen der vorliegenden Erfindung wesentliches Merkmal besteht darin, das der Farb-Sensor 17 mehrere, z. B. drei, quer zur Warenbahnlänge gleichlaufende Messpunkte (Detektoren 11 bis 13) mit einer gemeinsamen Lichtquelle besitzt. In Fig. 2 wird die gemeinsame Lichtquelle bzw. Beleuchtung mit 22 bezeichnet. Die Beleuchtung besitzt eine Steuerverbindung 23 zum Farbsensor 17 sowie Lichtleiter 24 bis 26 zu den einzelnen Detektoren 11 bis 13.

### Bezugszeichenliste:

- 1 =: Warenbahn
- 2 =: Foulard
- 3, 4 =: Walzen
- 5 =: Behandlungsflüssigkeit
- 6 =: Quetsche
- 7 =: Walze
- 8 =: Sensorvorrichtung
- 9 =: Achse
- 11 bis 13 =: Detektoren
- 14 bis 16 =: Lichtleiter
- 17 =: Farb-Sensor
- 18 =: Stromversorgung
- 19 =: Anschlussleitung
- 20 =: PC
- 21 =: Liniensteuerung
- 22 =: Beleuchtung
- 23 =: Steuerverbindungen
- 24 bis 26 =: Lichtleiter

- a =: Abstand

- A bis C =: Kanäle

## Patentansprüche

1. Vorrichtung zur relativen Farbmessung an einer vorbeibewegten Materialbahn (1) mit Hilfe eines Mehrbereichs-Farbsensors (17), insbesondere Dreibereichs-Farbsensor, zum Ermitteln und Vergleichen des Farbausfalls von sich parallel zur Materialbahnlänge erstreckenden Materialbahnbereichen, **dadurch gekennzeichnet, dass** ein True-Color-Farbsensor (17) mit Temperatur-Kompensation sowie Mitteln zum Ausführen von Differenzmessungen bei ein- und ausgeschalteter Beleuchtung (22) vorgesehen sind und dass der Farbsensor (17) mehrere quer zur Materialbahnlänge zu bewegende Messpunkte (11 bis 13) mit einer gemeinsamen Lichtquelle (22) zum zeitgleichen Abtasten der Materialbahn (1) besitzt.

2. Vorrichtung nach Anspruch 1, **dadurch gekennzeichnet, dass** eine targetbezogene lineare und/oder nicht-lineare Korrekturmatrix zur Angleichung der Filterfunktion jedes einzelnen Messpunktes (11 bis 13) vorgesehen ist.

3. Vorrichtung nach Anspruch 1 oder 2, **dadurch gekennzeichnet, dass** die Materialbahn (1) eine textile Stoffbahn ist.

4. Vorrichtung nach Anspruch 1 oder 2, **dadurch gekennzeichnet, dass** die Materialbahn (1) eine Papier- oder Kunststoffbahn, ein Furnierband oder dergleichen langgestrecktes nicht textiles Flächengebilde ist.

## Claims

1. Device for measuring the relative coloration of a moving material sheet (1) by means of a multirange colour sensor (17), in particular a three-range colour sensor, for determining and comparing deficiencies in colour on areas of material sheets extending parallel to the length of the material sheet, **characterized in that** a true-colour sensor (17) with temperature compensation and means for performing differential measurements with switched on and switched off lighting (22) are provided, and **in that** the colour sensor (17) has several measurement points (11 to 13) to be moved at right angles to the length of the material sheet with a common light source (22) for simultaneously scanning the material sheet (1).

2. Device according to claim 1, **characterized in that** a target-related linear and/or non-linear correction matrix is provided for matching the filter function of each individual measurement point (11 to 13).

3. Device according to claim 1 or 2, **characterized in that** the material sheet (1) is a textile material sheet.

4. Device according to claim 1 or 2, **characterized in that** the material sheet (1) is a paper or plastic sheet, a veneer strip or similar elongated non-textile type of surface.

## Revendications

1. Dispositif de mesure de couleur relative sur une bande (1) de matière en cours de défilement, au moyen d'un capteur (17) de couleurs à gammes multiples, en particulier un capteur de couleurs à trois gammes, pour déterminer et comparer les défauts de teinture sur des zones de la bande de matière qui s'étendent parallèlement à la longueur de la bande de matière, **caractérisé en ce qu'**il inclut un capteur (17) de couleurs du type dit True-color, littéralement couleurs vraies, à compensation de température ainsi que des moyens d'exécution de mesures de différences entre éclairage (22) allumé et éteint, et **en ce que** le capteur (17) de couleurs possède plusieurs points de mesure (11 à 13) à source lumineuse commune (22), à déplacer transversalement à la longueur de la bande de matière en vue d'une analyse simultanée de la bande de matière (1).

2. Dispositif selon la revendication 1, **caractérisé en ce qu'**une matrice de correction, linéaire et/ou non linéaire, spécifique à la cible, est prévue pour compenser la fonction de filtrage de chaque point de mesure individuel (11 à 13).

3. Dispositif selon la revendication 1 ou 2, **caractérisé en ce que** la bande de matière (1) est une bande d'étoffe textile.

4. Dispositif selon la revendication 1 ou 2, **caractérisé en ce que** la bande de matière (1) est une bande de papier ou de matière plastique , une bande de placage ou un produit plan non textile similaire s'étendant dans le sens de la longueur.
